# DEMANDE DE BREVET EUROPEEN

(11) **EP 4 258 380 A1**
(43) Date de publication de la demande: **11.10.2023**
(21) Numéro de dépôt: 22167459.1
(22) Date de dépôt: 08.04.2022
(51) Int. Cl.: H01M 4/134, H01M 4/62, H01M 10/052, H01M 10/054, H01M 10/0562, H01M 10/058, H01M 10/42, H01M 4/131, H01M 4/58

(54) **BATTERIE À ELECTROLYTE SOLIDE ET SON PROCÉDÉ DE FABRICATION PAR PROTONATION**

(71) Demandeur: The Swatch Group Research and Development Ltd, 2074 Marin (CH); EMPA, Swiss Federal Laboratories for Materials Testing and Research, 8600 Dübendorf (CH)
(72) Inventeur: GRISSA, Rabeb, 2000 Neuchâtel 1 (CH); BATTAGLIA, Corsin, 8315 Lindau (CH)
(74) Mandataire: ICB SA

(57) **Abrégé**

L'invention se rapporte à une batterie (20) à électrolyte (8) solide et son procédé de réalisation, le procédé comprenant les étapes successives suivantes :
- une étape de protonation d'un corps (11) comprenant, de préférence en totalité, un matériau céramique susceptible d'être protoné, pour former une couche protonée (12, 13) sur le corps (11),
- une étape de dépôt d'un élément métallique formant anode (14) sur la couche protonée (13) d'un premier côté (7) du corps (11),
- une étape d'assemblage d'une cathode (15) sur un deuxième côté (9) du corps (11), de préférence opposé au premier côté (7) de l'anode (14), et
- une étape de formation de dendrites (18) à partir de l'élément métallique dans la couche protonée (13) du corps (11).

## Description

### Domaine technique de l'inventions

L'invention concerne les batteries à électrolyte solide, dites batteries tout solide ou « all solid-state batteries » en anglais.

L'invention concerne encore le procédé de fabrication d'une telle batterie à électrolyte solide.

L'invention concerne également les systèmes électroniques, tels une montre, un ordinateur portable, un téléphone portable ou un véhicule automobile, comportant une telle batterie à électrolyte solide.

### Arrière-plan technologique

Les batteries à électrolyte solide ou tout solide, sont des alternatives aux accumulateurs de type lithium-ion. Contrairement à ces derniers, qui comportent un électrolyte liquide, les batteries tout solide comprennent un électrolyte solide disposé entre une anode et une cathode.

De telles batteries ont l'avantage d'avoir une densité énergétique supérieure aux batteries lithium-ion, et ont donc une capacité de stockage plus importante, ce qui est prometteur dans beaucoup de domaines d'application.

Il est connu d'utiliser des composés céramiques comme électrolyte solide, tels des composés de type LLZO.

Le composé de type LLZO a une conductivité ionique élevée. Ce composé céramique comprend du lithium, du lanthane, du zirconium et de l'oxygène, et a par exemple comme formule chimique Li₇La₃Zr₂O₁₂ ou Li₇La₃Zr₂O₇. Il peut aussi être dopé au tantale ou à l'aluminium, afin de stabiliser sa phase cubique, conductrice aux ions lithium. Il a alors par exemple comme formule chimique Li_{6.4}La₃Zr₂Ta_{0.6}O₁₂.

Un inconvénient des composés céramiques réside dans le contact entre l'anode, par exemple en lithium, et l'électrolyte solide. En effet, il est important d'éviter la présence d'impuretés et d'aspérités entre les deux éléments, car elles créent des courants de constrictions et des cavités, qui engendrent la formation de dendrites de lithium qui traversent le composé céramique et produisent des court-circuits. En effet, ces courants de constrictions peuvent dépasser une valeur seuil de courant, qui provoque l'apparition de dendrites, notamment de lithium, dans le composé céramique.

Pour remédier à ce problème, une solution est de disposer un liquide conducteur entre le composé céramique et l'anode en lithium. Ainsi, on améliore le contact entre les deux.

Cependant, on retrouve alors les mêmes problèmes liés aux batteries à électrolyte liquide, en particulier le risque de fuite du liquide en dehors de la batterie, et les conséquences qui en découlent. En outre, le risque de formation de dendrites de lithium n'est pas résolu avec la présence d'un liquide.

### Résumé de l'invention

L'invention a pour but de remédier aux inconvénients précités, et vise à fournir un procédé de réalisation permettant de former une batterie à électrolyte solide qui améliore le contact entre l'anode et l'électrolyte solide, sans avoir recours à un élément de contact liquide.

A cette fin, l'invention se rapporte à procédé de réalisation d'une batterie à électrolyte solide.

L'invention est remarquable en ce que le procédé comprend les étapes successives suivantes :
- une étape de protonation d'un corps comprenant, de préférence en totalité, un matériau céramique susceptible d'être protoné, pour former une couche protonée sur le corps,
- une étape de dépôt d'un élément métallique formant anode sur la couche protonée d'un premier côté du corps,
- une étape d'assemblage d'une cathode sur un deuxième côté du corps, de préférence opposé au premier côté de l'anode, et
- une étape de formation de dendrites à partir de l'élément métallique dans la couche protonée du corps.

La couche protonée de la céramique est moins dure que la céramique initiale, de sorte qu'il est plus facile de former des dendrites dans cette couche. Les dendrites améliorent le contact entre l'élément métallique et le corps de l'électrolyte solide, en particulier parce que la surface de contact est augmentée par les irrégularités de contact formées par les dendrites. En outre, la partie restée non protonée du corps, qui est plus dure, empêche ces dendrites de se propager jusqu'à la cathode et de provoquer un court-circuit. De plus, on évite le risque d'apparition de courants de constriction, et ainsi la formation de dendrites dans cette partie non protonée.

Selon une forme de réalisation particulière de l'invention, le matériau céramique est à choisir parmi :
- l'oxyde de zirconium au lithium et/ou lanthane, dopé ou non dopé de type LLZO,
- un matériau électrolyte solide beta-alumina, dopé ou non-dopé, de type Na-b"-Al₂O₃,
- un matériau électrolyte solide à base de sulfure ternaire, quaternaire ou d'ordre supérieur, par exemple de type Li₆PS₅X (où X est à choisir parmi les éléments Cl, Br ou I) ou de type Li₂S-P₂S₅,
- un matériau électrolyte solide à base d'halogènes ternaire, quaternaire ou d'ordre supérieur, par exemple de type Li₃MX₆ (ou M est un métal ou un alliage de métaux, et X un halogène),
- un matériau électrolyte solide conducteur d'ions lithium de type LISICON (pour lithium super ionic conductor), par exemple de type Li_{4±*x*}Si_{1-*x*}X*ₓ*O₄ (où X est à choisir parmi les éléments P, Al, ou Ge), et
- un matériau électrolyte solide conducteur d'ions sodium de type NASICON (pour sodium super ionic conductor), par exemple de type NaₓMM'(XO₄)₃ (où M et M' sont des métaux et X est à choisir parmi les éléments Si, P ou S).

Selon une forme de réalisation particulière de l'invention, dans l'étape de protonation, le corps est plongé dans un solvant protique ou acide, tel que l'eau, l'acétone, l'huile minérale ou l'éthanol.

Selon une forme de réalisation particulière de l'invention, le procédé comporte une étape supplémentaire de chauffage du corps à une température prédéfinie pour nettoyer le corps des impuretés, la température prédéfinie étant de préférence comprise entre 350°C et 450°C, l'étape supplémentaire de chauffage précédant l'étape de dépôt de l'élément métallique.

Selon une forme de réalisation particulière de l'invention, l'étape de formation de dendrites comprend une succession répétée de cycles de passage de courant entre l'anode et la cathode.

Selon une forme de réalisation particulière de l'invention, l'élément métallique est fondu sur le corps lors de l'étape de dépôt de l'élément métallique.

Selon une forme de réalisation particulière de l'invention, l'élément métallique comprend un matériau à choisir parmi :
- les métaux alcalins, tels que le lithium, le sodium, le potassium, le rubidium, le césium ou le francium,
- les métaux alcalino-terreux, tels que le béryllium, le magnésium, le calcium, le strontium, le baryum ou le radium,
- l'ensemble des métaux de transition, qui appartiennent aux colonnes 3 à 11 du tableau périodique, y compris les lanthanides et actinides, et
- des alliages de ces métaux.

Selon une forme de réalisation particulière de l'invention, le procédé comprend une étape supplémentaire de suppression d'une partie de la couche protonée du corps afin de déposer la cathode directement sur la partie non protonée du corps.

Selon une forme de réalisation particulière de l'invention, l'étape supplémentaire de suppression d'une partie de la couche protonée du corps est effectuée par polissage du deuxième côté du corps.

Selon une forme de réalisation particulière de l'invention, la cathode comprend un matériau à choisir parmi :
- un oxyde de lithium-nickel-manganèse-cobalt de type NMC, tel LiNixMnyCozO2 ou Li2-x-y-zNixMnyCozO2 avec x+y+z ≤1,
- un oxyde de lithium-nickel-manganèse de type LNMO, tel LiNi0.5Mn1.5O4,
- un oxyde de phosphate de fer lithié de type LFP, tel LiFePO4,
- un oxyde de lithium-manganèse de type LMO, tel LiMn2O4, et
- un oxyde de lithium-nickel-cobalt-aluminium de type NCA, tel LiNiCoAlO2.

L'invention se rapporte également à une batterie à électrolyte solide comprenant une anode, une cathode, et un électrolyte solide en céramique, caractérisée en ce que l'électrolyte solide est muni d'une couche protonée et d'une partie non protonée superposées, la cathode étant déposée sur le corps, l'anode comprenant un élément métallique déposé sur la couche protonée du corps à l'opposé de la cathode, l'élément métallique comprenant des dendrites infiltrées dans la couche protonée du corps.

Selon une forme de réalisation particulière de l'invention, les dendrites sont bloquées par la partie non protonée du corps.

Selon une forme de réalisation particulière de l'invention, l'élément métallique comprend un matériau à choisir parmi :
- les métaux alcalins, tels que le lithium, le sodium, le potassium, le rubidium, le césium ou le francium,
- les métaux alcalino-terreux, tels que le béryllium, le magnésium, le calcium, le strontium, le baryum ou le radium,
- l'ensemble des métaux dits de transition, qui appartiennent aux colonnes 3 à 11 du tableau périodique, y compris les lanthanides et actinides, et
- des alliages de ces métaux.

Selon une forme de réalisation particulière de l'invention, le matériau céramique est à choisir parmi :
- l'oxyde de zirconium au lithium et/ou lanthane, dopé ou non dopé de type LLZO,
- un matériau électrolyte solide beta-alumina, dopé ou non-dopé, de type Na-b"-Al2O3,
- un matériau électrolyte solide à base de sulfure ternaire, quaternaire ou d'ordre supérieur, par exemple de type Li6PS5X (où X est à choisir parmi les éléments Cl, Br ou I) ou de type Li₂S-P₂S₅,
- un matériau électrolyte solide à base d'halogènes ternaire, quaternaire ou d'ordre supérieur, par exemple de type Li3MX6 (ou M est un métal ou un alliage de métaux, et X un halogène),
- un matériau électrolyte solide conducteur d'ions lithium de type LISICON (pour lithium super ionic conductor), par exemple de type Li_{4±*x*}Si₁-xXxO4 (où X est à choisir parmi les éléments P, Al, ou Ge), et
- un matériau électrolyte solide conducteur d'ions sodium de type NASICON (pour sodium super ionic conductor), par exemple de type NaxMM'(XO4)3 (où M et M' sont des métaux et X est à choisir parmi les éléments Si, P ou S).

Selon une forme de réalisation particulière de l'invention, la cathode est collée à la partie non protonée du corps.

Selon une forme de réalisation particulière de l'invention, la cathode comprend un matériau à choisir parmi :
- un oxyde de lithium-nickel-manganèse-cobalt de type NMC, tel LiNixMnyCozO2 ou Li2-x-y-zNixMnyCozO2 avec x+y+z ≤1,
- un oxyde de lithium-nickel-manganèse de type LNMO, tel LiNi0.5Mn1.5O4,
- un oxyde de phosphate de fer lithié de type LFP, tel LiFePO4,
- un oxyde de lithium-manganèse de type LMO, tel LiMn2O4, et
- un oxyde de lithium-nickel-cobalt-aluminium de type NCA, tel LiNiCoAlO2.

L'invention se rapporte encore à un système électronique, par exemple une montre, un drone, un ordinateur portable, un téléphone portable ou un véhicule automobile, comprenant une telle batterie tout solide.

### Brève description des figures

D'autres particularités et avantages ressortiront clairement de la description qui en est faite ci-après, à titre indicatif et nullement limitatif, en référence aux dessins annexés, dans lesquels :
- la figure 1 est un schéma synoptique représentant les étapes du procédé selon l'invention ; et
- les figures 2a) à 2f) sont des représentations schématiques en coupe droite de la batterie après chaque étape du procédé de réalisation de la batterie selon l'invention.

### Description détaillée de l'invention

L'invention se rapporte à un procédé de réalisation 10 d'une batterie à électrolyte solide 20. Une telle batterie 20 comprend une anode 14, une cathode 15 et un électrolyte agencé entre la cathode 15 et l'anode 14. On appelle électrolyte solide 8, un électrolyte qui n'est pas liquide.

L'électrolyte 8 est formé à partir d'un corps 11 comprenant un matériau capable de subir une protonation. Autrement dit, il est capable d'échanger des ions H⁺ avec des protons. De préférence le corps 11 comprend ce matériau en totalité.

Le matériau céramique utilisé est à choisir parmi :
- l'oxyde de zirconium au lithium et/ou lanthane, dopé ou non dopé de type LLZO,
- un matériau électrolyte solide beta-alumina, dopé ou non-dopé, de type Na-b"-Al2O3,
- un matériau électrolyte solide à base de sulfure ternaire, quaternaire ou d'ordre supérieur, par exemple de type Li₆PS₅X (où X est à choisir parmi les éléments Cl, Br ou I) ou de type Li₂S-P₂S₅,
- un matériau électrolyte solide à base d'halogènes ternaire, quaternaire ou d'ordre supérieur, par exemple de type Li₃MX₆ (ou M est un métal ou un alliage de métaux, et X un halogène),
- un matériau électrolyte solide conducteur d'ions lithium de type LISICON (pour lithium super ionic conductor), par exemple de type Li_{4±*x*}Si_{1-*x*}X*ₓ*O₄ (où X est à choisir parmi les éléments P, Al, ou Ge), et
- un matériau électrolyte solide conducteur d'ions sodium de type NASICON (pour sodium super ionic conductor), par exemple de type NaₓMM'(XO₄)₃ (où M et M' sont des métaux et X est à choisir parmi les éléments Si, P ou S).

Le matériau céramique comprend de préférence ce matériau en totalité.

De préférence, on choisit le composé de type LLZO, car il a une grande conductivité ionique.

Pour réaliser la batterie 20, on utilise un procédé comprenant une première étape de protonation 1 du corps en céramique 11. Le corps 11 est plongé dans un solvant protique ou acide, tel que l'eau, l'acétone, de l'huile minérale ou l'éthanol, afin de remplacer des atomes de la céramique par un proton. De préférence, on choisit l'eau comme solvant protique.

Le corps est plongé pendant une longue durée, au moins une journée, de préférence plusieurs jours, voire une semaine ou plus, selon la taille du corps 11 et de la couche protonée que l'on souhaite obtenir.

Le corps a par exemple une forme de pastille ayant une épaisseur de 0.7mm afin de former une petite batterie 20. Le corps a de préférence été préalablement poli pour avoir des faces parallèles.

De préférence, pour accélérer le processus, le liquide est chauffé à une température prédéterminée, par exemple à 50°C.

Dans le cas du composé de type LLZO, la formule de protonation avec de l'eau est la suivante :

LLZO+ H₂O→HLLZO + LiOH.

Quel que soit le liquide utilisé, on obtient le composé protoné de type HLLZO. Le composé protoné de type HLLZO est plus mou que le composé non protoné de type LLZO, qui est une céramique très dure.

Suite à cette étape, le corps 11 comprend une couche protonée 12, 13 autour du corps 11. La couche 12, 13 est disposée autour du corps entier 11, si le corps est totalement immergé dans le liquide.

La couche a par exemple une épaisseur de 20 µm. Une première couche 13 est disposée d'un premier côté 7 du corps 11, et une deuxième couche 12 est disposée d'un deuxième côté 9 du corps 11.

Le procédé 10 comporte une deuxième étape de suppression 2 de la deuxième couche protonée 12 du deuxième côté 9 du corps 11 pour pouvoir déposer la cathode 15 directement sur une partie non protonée du corps 11 dans une étape ultérieure. En effet, la conductivité entre la cathode 15 et une partie non protonée est meilleure qu'entre une cathode 15 et une partie protonée.

De préférence, la deuxième étape de suppression 2 comprend un polissage du deuxième côté 9 du corps 11. Le polissage permet d'enlever la couche de matériau protonée 12 pour mettre à nu une partie non protonée du corps 11. On utilise par exemple un outil de polissage dont le grain est de 600 pour supprimer la couche protonée de type HLLZO.

Dans une troisième étape 3, on procède au chauffage du corps 11 à une température prédéfinie pour nettoyer le corps 11 des impuretés. La température prédéfinie est de préférence comprise entre 300 et 500° C, de préférence entre 350°C et 450°C. Cette plage de température évite la dénaturation ou la décomposition du matériau du corps 11, qu'il soit protoné ou non protoné. En particulier, on veut enlever les molécules de type carbonate de la surface du corps 11, car elles augmentent la résistance à l'interface de l'électrode et de l'électrolyte. Le temps de chauffage est par exemple de trois heures.

La quatrième étape 4 consiste à déposer un élément métallique formant anode 14 sur la partie protonée du premier côté du corps 11. Le premier côté 7 est choisi opposé au deuxième côté 9 du corps 11. Ainsi, la cathode 15 et l'anode 14 sont agencés de part et d'autre du corps 11.

L'élément métallique comprend un matériau à choisir parmi :
- les métaux alcalins, tels que le lithium, le sodium, le potassium, le rubidium, le césium ou le francium,
- les métaux alcalino-terreux, tels que le béryllium, le magnésium, le calcium, le strontium, le baryum ou le radium,
- l'ensemble des métaux de transition, qui appartiennent aux colonnes 3 à 11 du tableau périodique, y compris les lanthanides et actinides, et
- des alliages de ces métaux.

L'élément métallique comprend de préférence ce matériau en totalité.

De préférence, on choisit le lithium pour ses propriétés physiques et chimiques favorables pour son utilisation en tant qu'anode 14.

L'élément métallique en fusion est déposé sur le premier côté 7 protoné du corps 11. Autrement dit, l'élément métallique est déposé sous une forme fondue sur le premier côté 7. Dans cet état, l'élément métallique adhère au corps 11 du premier côté 7, en particulier pour maximiser l'étendue de la face de contact entre l'élément métallique et le corps 11.

Le procédé comprend une cinquième étape 5 d'assemblage d'une cathode 15 sur le corps 11 du deuxième côté 9 opposé à l'anode 14, qui n'est pas protoné suite au polissage de la deuxième étape 2.

A cette fin, on utilise une colle 16 en matériau polymère pour les assembler, appelée catholyte, la colle 16 étant conductrice d'ions pour que le passage des ions puisse se produire.

On utilise par exemple une colle polymère 16 comprenant de l'oxyde de polyéthylène de type PEO, un sel de lithium de type LiTFSi (pour bis-(trifluorométhanesulfonyl)-imide de lithium), ainsi que du THF (pour Tétrahydrofurane). La colle polymère 16 est dissoute dans le THF (pour tétrahydrofurane), puis est déposée sur le deuxième côté 9, par exemple au moyen d'une méthode de type « drop casting », puis la cathode 15 est déposée sur la colle polymère 16 après séchage du THF, de sorte que la cathode 15 adhère au deuxième côté 9 de manière permanente.

La cathode 15 comprend par exemple un matériau à choisir parmi :
- un oxyde de lithium-nickel-manganèse-cobalt de type NMC, tel LiNiₓMn_{y}Co_{z}O₂ ou Li_{2-x-y-z}NiₓMn_{y}Co_{z}O₂ avec x+y+z ≤1,
- un oxyde de lithium-nickel-manganèse de type LNMO, tel LiNi_{0.5}Mn_{1.5}O₄,
- un oxyde de phosphate de fer lithié de type LFP, tel LiFePO4,
- un oxyde de lithium-manganèse de type LMO, tel LiMn2O4, et
- un oxyde de lithium-nickel-cobalt-aluminium de type NCA, tel LiNiCoAlO2.

La cathode 15 comprend de préférence ce matériau en majorité, ainsi que la colle polymère et du carbone afin d'améliorer sa conductivité ionique et électronique.

La sixième étape 6 consiste à former des dendrites 18 dans la couche protonée 13 restante à partir de l'élément métallique de l'anode 14. Les dendrites 18 sont des éléments allongés qui pénètrent dans la couche protonée 13, qui est plus fragile que la partie non protonée 11. Les dendrites 18 se forment naturellement par le passage du courant. Des fissures apparaissent dans la couche protonée 13, qui sont ensuite remplies par l'élément métallique provenant de l'anode 14.

A cette fin, la sixième étape 6 comprend une succession répétée de cycles de passage de courant entre l'anode 14 et la cathode 15. A chaque cycle, un courant est appliqué aux bornes de la batterie, à l'anode 14 et à la cathode. Le courant est par exemple choisi de manière à avoir 0.1 mA /cm².

On effectue plusieurs cycles, de préférence moins d'une dizaine, en alternant la polarité du courant. Un courant positif suit un courant négatif, et réciproquement.

Les dendrites 18, de préférence en lithium, pénétrant dans la couche protonée 13 favorisent la qualité du contact ionique en augmentant la surface de contact entre l'anode 14 et l'électrolyte solide 8.

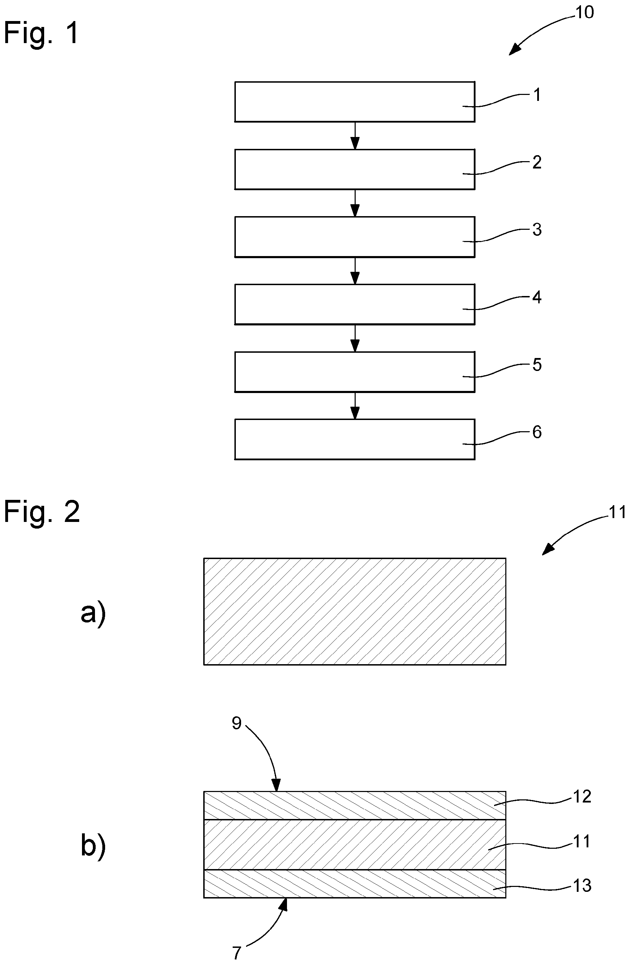

Sur la figure 2a), est représenté un corps 11 comprenant en totalité un matériau céramique de type LLZO. Après la première étape de protonation, le corps 11 comprend une couche protonée 12, 13 autour du corps 11, comme le montre la figure 2b). Une première couche 13 est agencée d'un premier côté 7 du corps 11 et une deuxième couche 12 est agencée d'un deuxième côté 9 du corps 11

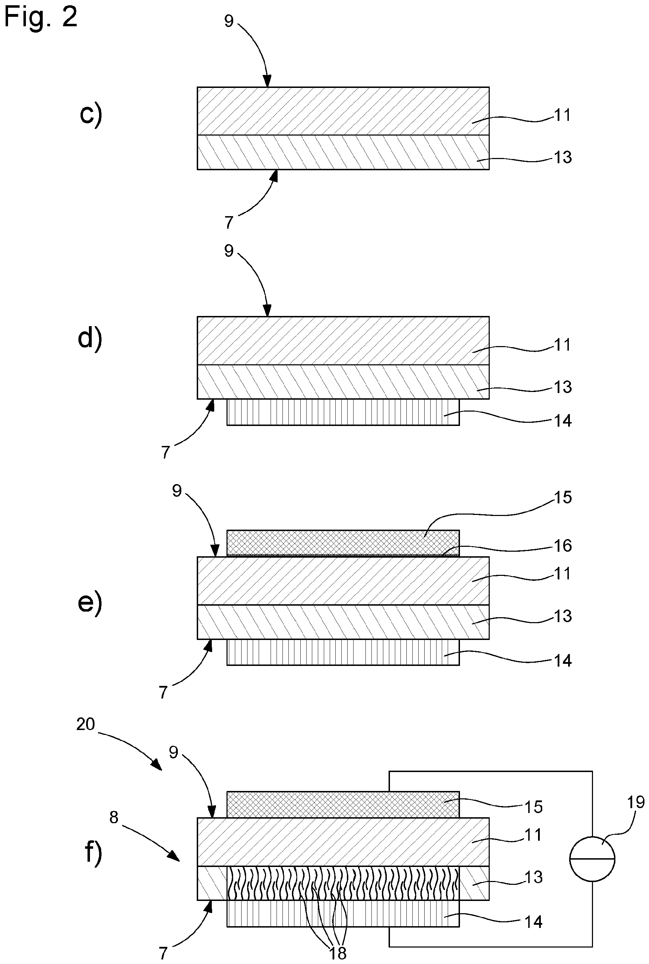

Le corps 11 est ensuite poli du deuxième côté 9 du corps 11, de manière à découvrir une partie non protonée de ce côté. Le corps 11 de la figure 2c) a ainsi une partie non protonée du deuxième côté 9 et une couche protonée 13 d'un premier côté 7 du corps 11.

Selon la quatrième étape, une anode 14 est formée sur le premier côté 7 protoné du corps 11, par le dépôt d'un élément métallique fondu, de préférence en lithium, tel que représenté sur la figure 2d). Le corps 11 reste sensiblement identique après la cinquième étape de nettoyage,

Une cathode 15 est collée sur le deuxième côté 9 non protoné du corps 11, grâce à de la colle polymère 16, comme le montre la figure 2e).

La figure 2f) montre la sixième étape de formation des dendrites, au cours de laquelle un courant est appliqué par cycles à l'anode 14 et la cathode 15 de la batterie au moyen d'un générateur de courant 19. On observe des dendrites 18 formées dans les fissures de la couche protonée 13 du corps 11. Ces dendrites 18 sont bloquées par la partie non protonée du corps 11, qui est plus dure que la couche protonée 13.

Les dendrites 18 sont des éléments fins allongés, qui s'étendent dans la couche protonée 13 depuis l'anode 14.

Ainsi, on obtient une batterie 20 avec une anode 14 et une cathode 15 de chaque côté de l'électrolyte 8, le corps 11 ayant une couche de céramique protonée 13 et une partie non protonée superposées.

On peut utiliser un telle batterie 20 dans tout système électronique, telle une montre, un drone un téléphone portable, un ordinateur portable, voire un véhicule électronique automobile. Dans le cas d'un véhicule automobile, la taille de la batterie est bien sûre plus importante.

Naturellement, l'invention n'est pas limitée aux modes de réalisation décrits en référence aux figures et des variantes pourraient être envisagées sans sortir du cadre de l'invention.

## Revendications

1. Procédé de réalisation (10) d'une batterie (20) à électrolyte (8) solide, **caractérisé en ce que** le procédé comprend les étapes successives suivantes :
- une étape de protonation (1) d'un corps (11) comprenant, de préférence en totalité, un matériau céramique susceptible d'être protoné, pour former une couche protonée (12, 13) sur le corps (11),
- une étape de dépôt (4) d'un élément métallique formant anode (14) sur la couche protonée (13) d'un premier côté (7) du corps (11),
- une étape d'assemblage (5) d'une cathode (15) sur un deuxième côté (9) du corps (11), de préférence opposé au premier côté (7) de l'anode (14), et
- une étape de formation (6) de dendrites (18) à partir de l'élément métallique dans la couche protonée (13) du corps (11).

2. Procédé de réalisation (10) selon la revendication 1, **caractérisé en ce que** le matériau céramique est à choisir parmi :
- l'oxyde de zirconium au lithium et/ou lanthane, dopé ou non dopé de type LLZO,
- un matériau électrolyte solide beta-alumina, dopé ou non-dopé, de type Na-b"-Al₂O₃,
- un matériau électrolyte solide à base de sulfure ternaire, quaternaire ou d'ordre supérieur, par exemple de type Li₆PS₅X (où X est à choisir parmi les éléments Cl, Br ou I) ou de type Li₂S-P₂S₅,
- un matériau électrolyte solide à base d'halogènes ternaire, quaternaire ou d'ordre supérieur, par exemple de type Li₃MX₆ (ou M est un métal ou un alliage de métaux, et X un halogène),
- un matériau électrolyte solide conducteur d'ions lithium de type LISICON (pour lithium super ionic conductor), par exemple de type Li_{4±*x*}Si_{1-*x*}X*ₓ*O₄ (où X est à choisir parmi les éléments P, Al, ou Ge), et
- un matériau électrolyte solide conducteur d'ions sodium de type NASICON (pour sodium super ionic conductor), par exemple de type NaₓMM'(XO₄)₃ (où M et M' sont des métaux et X est à choisir parmi les éléments Si, P ou S).

3. Procédé de réalisation (10) selon la revendication 1 ou 2, **caractérisé en ce que** dans l'étape de protonation (1), le corps (11) est plongé dans un solvant protique ou acide, tels que l'eau, l'acétone, l'huile minérale ou l'éthanol.

4. Procédé de réalisation (10) selon l'une, quelconque, des revendications précédentes, **caractérisé en ce qu'**il comporte une étape supplémentaire de chauffage (3) du corps (11) à une température prédéfinie pour nettoyer le corps (11) des impuretés, la température prédéfinie étant de préférence comprise entre 350°C et 450°C, l'étape supplémentaire de chauffage (3) précédent l'étape de dépôt (4) de l'élément métallique.

5. Procédé de réalisation (10) selon l'une, quelconque, des revendications précédentes, **caractérisé en ce que** l'étape de formation (6) de dendrites (18) comprend une succession répétée de cycles de passage de courant entre l'anode (14) et la cathode (15).

6. Procédé de réalisation (10) selon l'une, quelconque, des revendications précédentes, **caractérisé en ce que** l'élément métallique est fondu sur le corps (11) lors de l'étape de dépôt (4) de l'élément métallique.

7. Procédé de réalisation (10) selon l'une, quelconque, des revendications précédentes, **caractérisé en ce que** l'élément métallique comprend un matériau à choisir parmi :
- les métaux alcalins, tels que le lithium, le sodium, le potassium, le rubidium, le césium ou le francium,
- les métaux alcalino-terreux, tels que le béryllium, le magnésium, le calcium, le strontium, le baryum ou le radium,
- l'ensemble des métaux de transition, qui appartiennent aux colonnes 3 à 11 du tableau périodique, y compris les lanthanides et actinides, et
- des alliages de ces métaux.

8. Procédé de réalisation (10) selon l'une, quelconque, des revendications précédentes, **caractérisé en ce qu'**il comprend une étape supplémentaire de suppression (2) d'une partie de la couche protonée (12) du corps (11) afin de déposer la cathode (15) directement sur la partie non protonée du corps (11).

9. Procédé de réalisation (10) selon la revendication 6, **caractérisé en ce que** l'étape supplémentaire de suppression (2) d'une partie de la couche protonée du corps (11) est effectuée par polissage du deuxième côté (9) du corps (11).

10. Procédé de réalisation (10) selon l'une, quelconque, des revendications précédentes, **caractérisé en ce que** la cathode (15) comprend un matériau à choisir parmi :
- un oxyde de lithium-nickel-manganèse-cobalt de type NMC, tel LiNiₓMn_{y}Co_{z}O₂ ou Li_{2-x-y-z}NiₓMn_{y}Co_{z}O₂ avec x+y+z ≤1,
- un oxyde de lithium-nickel-manganèse de type LNMO, tel LiNi_{0.5}Mn_{1.5}O₄,
- un oxyde de phosphate de fer lithié de type LFP, tel LiFePO₄,
- un oxyde de lithium-manganèse de type LMO, tel LiMn₂O₄, et
- un oxyde de lithium-nickel-cobalt-aluminium de type NCA, tel LiNiCoAlO₂.

11. Batterie (20) à électrolyte (8) solide comprenant une anode (14), une cathode (15) et un électrolyte (8) solide en céramique, **caractérisée en ce que** l'électrolyte (8) solide est muni d'une couche protonée (13) et d'une partie non protonée superposées, la cathode (15) étant déposée sur le corps (11), l'anode (14) comprenant un élément métallique déposé sur la couche protonée (13) du corps (11) à l'opposé de la cathode (15), l'élément métallique comprenant des dendrites (18) infiltrées dans la couche protonée (13) du corps (11).

12. Batterie (20) à électrolyte (8) solide selon la revendication 11, **caractérisé en ce que** les dendrites (18) sont bloquées par la partie non protonée du corps (11).

13. Batterie (20) à électrolyte (8) solide selon la revendication 11 ou 12, **caractérisée en ce que** l'élément métallique comprend un matériau à choisir parmi :
- les métaux alcalins, tels que le lithium, le sodium, le potassium, le rubidium, le césium ou le francium,
- les métaux alcalino-terreux, tels que le béryllium, le magnésium, le calcium, le strontium, le baryum ou le radium,
- l'ensemble des métaux dits de transition, qui appartiennent aux colonnes 3 à 11 du tableau périodique, y compris les lanthanides et actinides, et
- des alliages de ces métaux.

14. Batterie (20) à électrolyte (8) solide selon l'une, quelconque, des revendications 11 à 13, **caractérisée en ce que** le matériau céramique est à choisir parmi :
- l'oxyde de zirconium au lithium et/ou lanthane, dopé ou non dopé de type LLZO,
- un matériau électrolyte solide beta-alumina, dopé ou non-dopé, de type Na-b"-Al₂O₃,
- un matériau électrolyte solide à base de sulfure ternaire, quaternaire ou d'ordre supérieur, par exemple de type Li₆PS₅X (où X est à choisir parmi les éléments Cl, Br ou I) ou de type Li₂S-P₂S₅,
- un matériau électrolyte solide à base d'halogènes ternaire, quaternaire ou d'ordre supérieur, par exemple de type Li₃MX₆ (ou M est un métal ou un alliage de métaux, et X un halogène),
- un matériau électrolyte solide conducteur d'ions lithium de type LISICON (pour lithium super ionic conductor), par exemple de type Li_{4±*x*}Si_{1-*x*}X*ₓ*O₄ (où X est à choisir parmi les éléments P, Al, ou Ge), et
- un matériau électrolyte solide conducteur d'ions sodium de type NASICON (pour sodium super ionic conductor), par exemple de type NaₓMM'(XO₄)₃ (où M et M' sont des métaux et X est à choisir parmi les éléments Si, P ou S).

15. Batterie (20) à électrolyte (8) solide selon l'une, quelconque, des revendications 11 à 14, **caractérisée en ce que** la cathode (15) est collée à la partie non protonée du corps (11).

16. Batterie (20) à électrolyte (8) solide selon l'une, quelconque, des revendications 11 à 15, **caractérisée en ce que** la cathode (15) comprend un matériau à choisir parmi :
- un oxyde de lithium-nickel-manganèse-cobalt de type NMC, tel LiNiₓMn_{y}Co_{z}O₂ ou Li_{2-x-y-z}NiₓMn_{y}Co_{z}O₂ avec x+y+z ≤1,
- un oxyde de lithium-nickel-manganèse de type LNMO, tel LiNi_{0.5}Mn_{1.5}O₄,
- un oxyde de phosphate de fer lithié de type LFP, tel LiFePO₄,
- un oxyde de lithium-manganèse de type LMO, tel LiMn₂O₄, et
- un oxyde de lithium-nickel-cobalt-aluminium de type NCA, tel LiNiCoAlO2.

17. Système électronique, par exemple une montre, un ordinateur portable, un téléphone portable ou un véhicule automobile, comprenant une batterie (20) à électrolyte (8) solide, selon l'une, quelconque, des revendications 11 à 16.
